(19) European Patent Office — Europäisches Patentamt / European Patent Office / Office européen des brevets

(11) **EP 1 035 691 A2**

(12) **EUROPEAN PATENT APPLICATION**

(43) Date of publication:
**13.09.2000 Bulletin 2000/37**

(51) Int. Cl.[7]: **H04L 25/06**

(21) Application number: **00101879.5**

(22) Date of filing: **31.01.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **11.03.1999 US 266386**

(71) Applicant: **Intersil Corporation Palm Bay, Florida 32904 (US)**

(72) Inventors:
• **Bardsley, Scott**
  **Palm Bay, Florida 32907 (US)**
• **Tesch, Bruce**
  **Melbourne, Florida 32934 (US)**

(74) Representative:
**Fleuchaus, Leo, Dipl.-Ing.**
**Melchiorstrasse 42**
**81479 München (DE)**

(54) **DC offset correction using successive approximation**

(57) A DC offset correction arrangement compensates for DC offset introduced into a signal processing path of a device such as a data radio for application to a downstream digital data signal analyzer. During an off-line, calibration cycle, DC offset is measured by a successive approximation DC offset measurement circuit, which stores a multibit output digital code representative of the measured offset. This code is coupled to a DC offset correction circuit, which supplies selected signal processing components, such as a negative feedback low-pass filter coupled and a buffer amplifier, with a correction current that causes the supplied components to inject prescribed portions of a binarily weighted correction voltage that effectively cancels the measured DC offset.

FIG. 1

EP 1 035 691 A2

**Description**

The present invention relates to communication systems and is particularly directed to a mechanism for correcting for DC offsets that are introduced into the baseband down-conversion signal path of a radio receiver, such as that employed in a commercial direct spread-spectrum data radio.

In order to be competitive, telecommunication service providers who offer wireless data transmission services to business and consumer customers, such as by way of direct spread-spectrum data radio systems, as a non-limiting example, have found it necessary to employ low cost (reduced complexity) radio circuit designs. The performance of such cost-competitive radios is influenced by random noise, that is injected into the radio channel (and thereby limits the performance and range of the radio), and signal distortion, that results from filtering and modulation artifacts inherent in the radio.

More particularly, the use of relatively low cost components (such as a 'leaky' mixer) in the baseband-conversion path, may introduce DC offsets. These DC offsets can be very substantial at the input to downstream digitizing circuitry to which the signal path is coupled, due to large gains of the components in the baseband signal chain, thereby limiting the radio's dynamic range and resulting in errors in the data produced by the digitizing circuitry. To remove or cancel such DC offsets, it has been customary practice to AC or capacitively couple the baseband signal input to the receiver's analog-to-digital converter. A problem with capacitor-coupling is the charging time required, which impairs radio performance.

The present invention includes a DC offset correction device for compensating for DC offset that may be introduced by one or more components of a baseband conversion processing path of a communications receiver to which a signal received from a transmission channel is coupled for application to a downstream digital data signal analyzer to recover transmitted data, said DC offset correction device characterized in that a DC offset measurement circuit that is operative to decouple said baseband conversion processing path from said transmission channel and digitally measure any DC offset that may be present in said baseband conversion processing path absent said received signal, and a DC offset correction circuit coupled to said DC offset measurement circuit and to at least one signal processing component of said baseband conversion processing path, and being operative to inject into said baseband conversion processing path, by way of said at least one signal processing component, a DC offset correction voltage that effectively cancels said DC offset.

The invention also includes a use with a radio receiver, in which a signal received by way of a radio transmission channel is subjected to a baseband conversion processing path for application to a downstream digital data signal analyzer to recover transmitted data, a method for compensating for DC offset that may be introduced by one or more components in said baseband conversion processing path, said method comprising the steps of:

(a) decoupling said baseband conversion processing path from said radio transmission channel and digitally measuring any DC offset that may be present in said baseband conversion processing path absent said received signal; and

(b) recoupling said baseband conversion processing path to said radio transmission channel and digitally injecting, by way of at least one signal processing component of said baseband conversion processing path, a DC offset correction voltage that effectively cancels said DC offset measured in step (a), and in which step (a) comprises performing digital successive approximation of said DC offset that may be present in said baseband conversion processing path absent said received signal.

Conveniently, this DC offset problem is corrected without the use of capacitor-coupled path, by taking the baseband signal path off-line for a prescribed offset measurement interval, and measuring the DC offset that is introduced into the baseband path. As a non-limiting example, for a half-duplex radio, the DC offset through the radio's baseband receiver path may be measured during a calibration cycle that is carried out during transmit mode of operation of the radio.

In a preferred embodiment of the invention, the amount of DC offset correction required is measured using successive approximation to define selected amounts of offset that are imparted to respective baseband signal path components, such as low-pass filter and associated buffer amplifier circuitry installed between the RF/IF - baseband mixer and downstream analog-to-digital conversion circuitry. The parameters of the circuit implementations of the low-pass filter and the buffer amplifier are defined such that the bits that make up the DC offset correction code generated by a successive approximation register will impart a binary-scaled DC offset correction voltage to the baseband signal path.

The invention will now be described, by way of example, with reference to the accompanying drawings in which:

Figure 1 diagrammatically illustrates baseband conversion circuitry in the receiver section of a data radio;

Figure 2 shows a circuit implementation of a low-pass filter through which a portion of measured DC offset correction voltage may be imparted to the baseband signal processing path of the circuit of Figure 1;

Figure 3 shows a circuit implementation of a buffer amplifier through which a portion of DC offset correction voltage may be imparted to the baseband signal processing path of the circuit of Figure 1;

Figure 4 shows steps of a control processor-executed routine for controlling the operation of the DC offset measurement and correction scheme of the invention; and

Figure 5 contains a Table 1, which tabulates the manner in which bits produced by the IDAC of Figure 1 are mapped into binarily weighted DC offset correction voltages by the low-pass filter and buffer amplifiers circuits of Figures 2 and 3.

Before describing in detail the new and improved successive approximation-based DC offset correction mechanism for the down-conversion signal path of a data radio receiver. The configurations of circuits components and the manner in which they are interfaced with other communication system equipment have been illustrated in the drawings by block diagrams, which show only those specific details that are pertinent to the present invention. Thus, the block diagram illustrations are primarily intended to show the major components of the radio receiver's baseband conversion path in a convenient functional grouping.

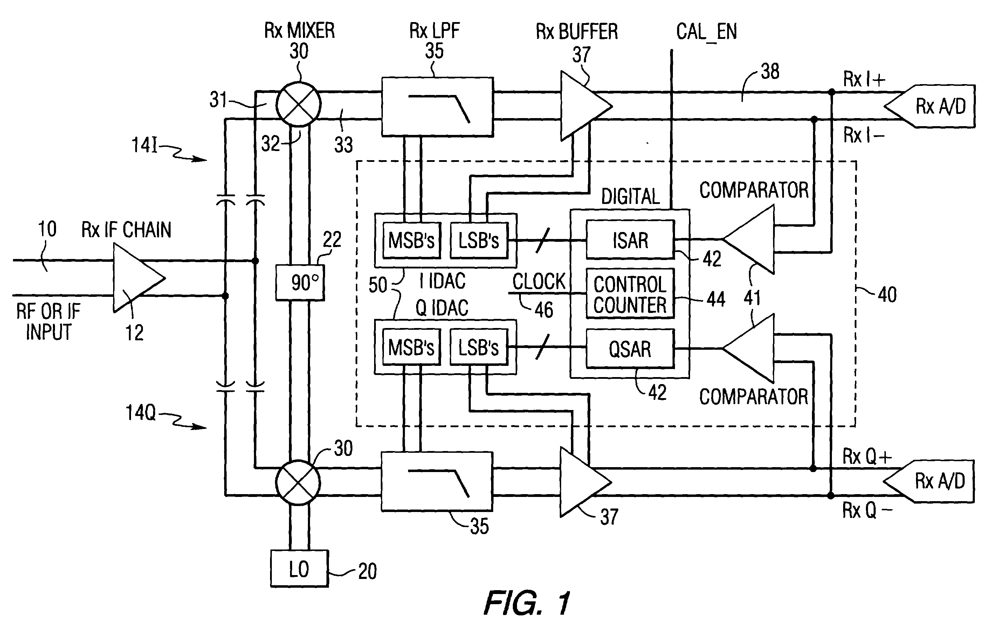

Figure 1 diagrammatically illustrates the baseband down-conversion path of the receiver section of a typical data radio, that has been modified to incorporate the successive approximation-based DC-offset correction mechanism of the present invention. An input RF or IF signal path 10 is coupled through a cascaded amplifier circuit arrangement 12, the output of which is coupled to respective in-phase (I) and quadrature-phase (Q) branches 14I and 14Q. Since signal processing through each of the I and Q baseband branches is the same (except for the initial quadrature phase offset introduced by a $90°$ phase shifter 22 into the output of a local oscillator 20 for the quadrature down-conversion path 14Q), the discussion below will detail only the in-phase path 14I, for the sake of providing a concise description.

At the front end of the in-phase path 14I, the received signal is coupled to a first input port 31 of a mixer 30, a second input port 32 of which is coupled to the output of the local oscillator 20. The down-converted (baseband) signal produced at the output 33 of mixer 30 is filtered in a low-pass filter 35, the output of which is coupled through a buffer amplifier 37 for application via a path 38 to the input RX_A/D of a downstream analog-to-digital converter.

DC offsets, such as may be introduced by the mixer 30, have been conventionally removed by AC-coupling the baseband signal path 38 through a capacitor to a downstream analog-to-digital converter. Unfortunately, this means that when the receiver path of the radio is enabled, as the user switches from the transmit mode to the receive mode, there is a delay time required for the capacitor to charge, which degrades performance.

The present invention obviates this problem by coupling the baseband signal path 38 path to an auxiliary DC offset measurement circuit 40. As will be described, during an off-line interval (e.g., in transmit mode when no data traffic is being received by the radio), the DC offset measurement circuit 40 is controllably enabled by means of a CAL_EN signal applied from the radio's control processor (not shown) to measure DC offset in the baseband path.

For this purpose, the respective leads (RX+ and RX-) of the RX_A/D path 38 are differentially coupled to a comparator 41, the output of which is coupled to successive approximation register (SAR) 42. Under the control of the contents of a control counter 44, which is driven by a clock input 46, the digital code contents of SAR 42 are incrementally adjusted on a bit-by-bit basis, beginning with the most significant bit (MSB) and concluding with the least significant bit (LSB) of the code resolution (number of binary bits) to which the offset is measured (e.g., eight bits as a non-limiting example), to realize a digital code value that is representative of the amount of DC correction that is to be introduced into the baseband signal processing path.

Pursuant to a preferred, but non-limiting embodiment of the invention, the total amount of DC offset correction derived by SAR 42 is subdivided or apportioned into respective values of DC offset correction to be individually injected in the baseband signal path 38 by the low-pass filter 35 and the buffer amplifier 37. Specifically, a selected number of MSBs (e.g., four in the present example) of the (eight bit) digital output code generated by the SAR 42 are converted into a first analog current value by a current digital-to-analog converter (IDAC) 50, and coupled as a differential adjustment current input Iadj that is used to set the DC offset correction voltage supplied by the low-pass filter 35. Also, a selected number of LSBs (e.g., four) of the SAR output are converted into a second analog current by digital-to-analog converter 50, and coupled as a differential control current input Iadj that is used to set the DC offset correction voltage supplied by the buffer amplifier 37.

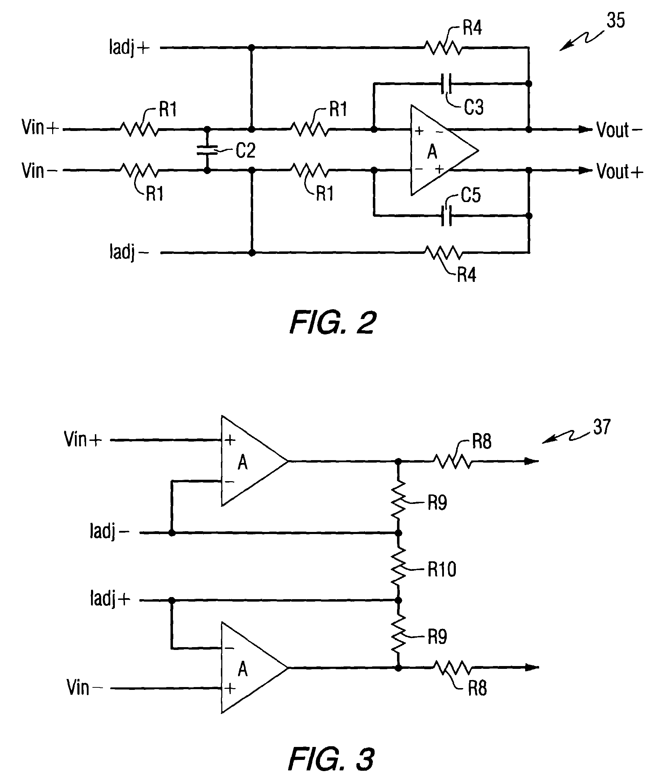

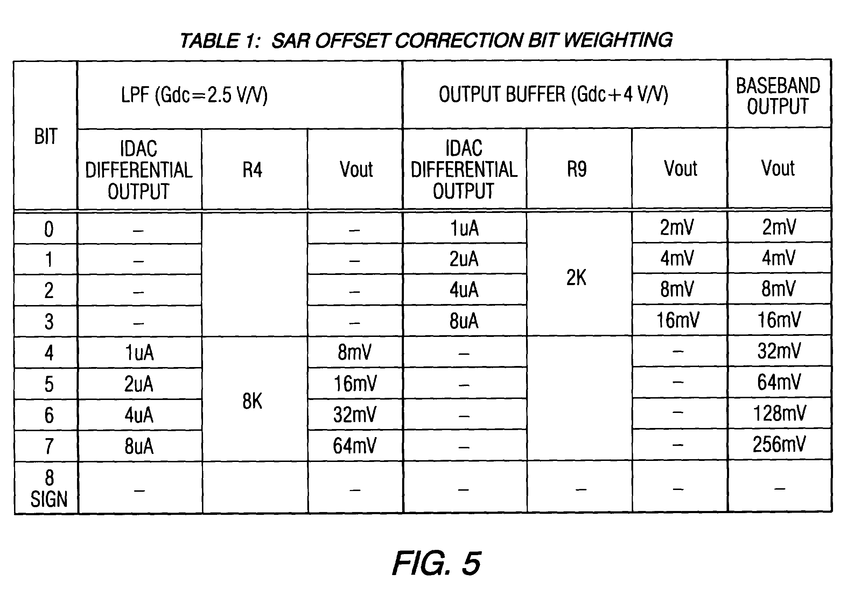

Advantageously, parameters of the circuit implementations of the low-pass filter 35 and the buffer amplifier 37, shown respectively in Figures 2 and 3, may be defined so that the bits that make up the DC offset correction code generated by SAR 42 will impart a binary-scaled DC offset correction voltage to the baseband signal path 38. For this purpose, as a non-limiting example, by the appropriate choice of the resistor value for negative feedback resistor R4 (e.g., 8 kilohms) whose ratio with the input resistor R1 (e.g., 3.2 kilohms) of the low-pass filter 35 sets the DC gain $G_{DC35}$ of the low-pass filter 35 (e.g. $G_{DC35} = (V_{outd35})/(V_{ind35}) = R4/R1 = 8k/3.2k = 2.5$ volts/volt (v/v) ), the upper four MSB currents produced by IDAC 50 will be scaled by a factor of 8K into the set of output voltages tabulated in Table 1, shown in Figure 5.

For the circuit implementation shown in Figure 2, the transfer function $(V_{outd35})/(V_{ind35})$ of low-pass filter may be defined as:

$$V_{outd35}/V_{ind35} = \frac{1/(2C_2C_5R_1{}^2}{s^2 + s(1/C_2R_1 + 1/C_2R_4) + 1/(2C_2C_5R_1R_4)}$$

For infinite amplifier gain $A_{35}$ and Vin+ - Vin- = $V_{ind}$ = 0 , then $V_{outd35}$ as a function of Iadjd may be defined as

$$V_{outd35}/I_{adj35} = \frac{1/(2C_2C_5R_1{}^2}{s^2 + s(1/C_2R_1 + 1/C_2R_4) + 1/(2C_2C_5R_1R_4)}$$

Similarly, by the appropriate choke of the resistor value for negative feedback resistor R9 (e.g., 2 kilohms) of the buffer amplifier 37, the value of the control current supplied to the differential DC offset control terminals Iadj+ and Iadj- of the buffer amplifier 37 will be converted to a binary-scaled output voltage equal to (R9 x Iadj) volts. As tabulated in Table 1, the binary input currents associated with the lower four LSB's of the DC offset correction code produced by SAR 42 are therefore converted into a set of four DC offset correction voltages, respectively equal to the product of the set of four (LSB-associated) input currents produced by IDAC 50 and the value of negative feedback resistor R9 (2 kilohms), to result in a set of four binary-scaled DC offset correction voltages (2mv-16mv).

By appropriate setting of the gain $G_{DC37}$ of the buffer amplifier 37, the set of (MSB-associated) output voltages produced by the low-pass filter 35 and applied to the differential input terminals (Vin+ and Vin-) of buffer amplifier 37 may be converted into values that provide a binary extension of the set of four binary-scaled DC offset correction voltages (2mv-16mv) associated with the four LSBs.

For infinite amplifier gain $A_{37}$ and Iadj+ - Iadj- = $I_{adjd}$ =0 , then the ratio of $V_{outd37}$ to $V_{ind37}$ may be defined as

$$V_{out37}/V_{ind37} = 1 + 2(R_9/R_{10}).$$

Therefore, with Vin+ - Vin- = $V_{ind}$ =0 , then $V_{outd35}$ as a function of Iadjd may be defined as:

$$V_{outd37} = R_9 x I_{adjd37}$$

In the present example, since the DC output voltage $V_{outd37}$ produced by buffer amplifier 37 for the uppermost LSB (bit 4) of the SAR DC offset correction code has a value of 16 mv, then the next binary scaling extension of that voltage would be 32 mv. Since the DC output voltage $V_{outd35}$ produced by low-pass filter 35 for the lowermost MSB (bit 5) of the SAR DC offset correction code is 8mv, then for buffer amplifier 37 to produce a DC output voltage of 32 mv for that same bit value requires that the gain $G_{DC37}$ of the buffer amplifier 37 be set at 4 v/v.

Therefore, as shown in Table 1, the combination of the choice of the resistor values for the respective negative feedback resistors R4 and R9 of the low-pass filter 35 and buffer amplifier 37 and the gain $G_{DC37}$ of the buffer amplifier 37 allows separately controlled circuit elements (the low-pass filter 35 and the buffer amplifier 37) to convert the eight bits of the correction code produced by SAR 42 into a wide range of binary scaled DC offset correction voltages.

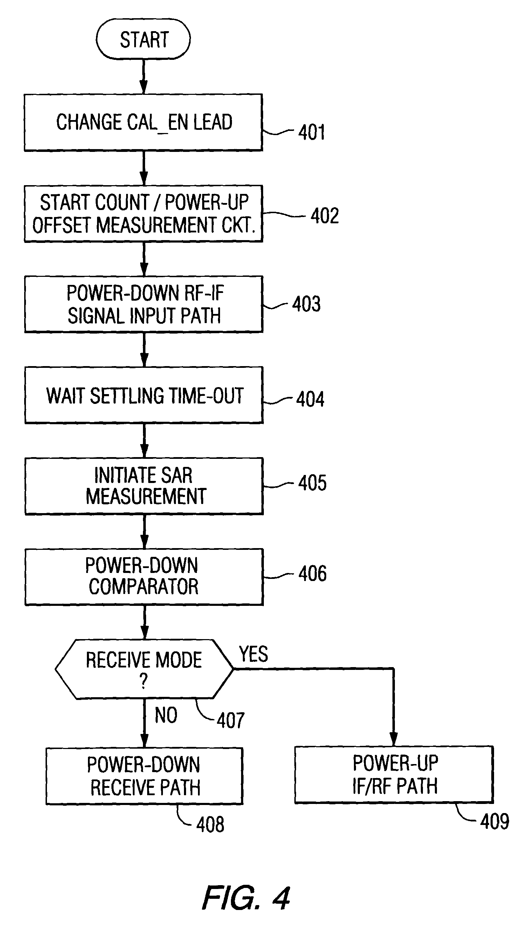

Operation of the DC offset correction mechanism of the present invention will now be described with reference to the control processor-executed routine shown in the flow chart of Figure 4. As pointed out briefly above, measurement of the amount of DC offset through the radios baseband receiver path is conducted by initiating a calibration cycle; as a non-limiting example, the calibration cycle may be conducted during the transmit mode of operation of the radio.

As shown at step 401, at the start of the DC offset measurement routine, the control processor changes the state of the CAL_EN lead to the enable input of the DC offset measurement circuit 40 (e.g., from low to high). Prior to this action, during which the CAL_EN lead was held in a prescribed logic state (e.g., low or 0), the components of the DC offset voltage measurement circuit 40 were reset or disabled.

In particular, isolation switching circuitry (not shown) decouples the baseband path 38 from the DC offset voltage measurement circuit 40, and the comparator 41 and IDAC 50 are turned off. Also, the digital registers of the SAR 42 holding a previously measured value of offset correction data are reset or cleared and the control counter 44

4

is also in its cleared or reset state.

In response to the CAL_EN lead being asserted high in step 401, the control counter 44 begins counting the clock signals applied on line 46, and a calibration logic circuit powers up the components of the receiver (i.e. mixer 30, low-pass filter 35, buffer amplifier 37, comparator 42 and IDAC 50, if not already on, as shown in step 402. Upon reaching a full or maximum count value (e.g., 11111 for a five bit counter), the control counter 44 will stay at this count until reset (to 00000) in response to the CAL_EN lead going low (0). The processor also powers down the IF path coupled to the input port 31 to the mixer 30 (if not already off), as shown at step 403. However, the local oscillator input port 32 remains active since local oscillator feed through constitutes one of the DC offset components that is to be corrected.

After the expiration of a prescribed settling time, in step 404, the comparator 42 is isolated from the other circuit components and its offset is nulled. With the comparator 42 now reset, then in step 405, the SAR 42 is enabled and begins stepping through the respective bits of its output code resolution, MSB first, until the successive approximation sequence runs to completion and thereby produces the multibit output code that is used by IDAC 50 to generate the offset values of the DC offset correction adjustment currents Iadj, tabulated in Table 1.

With the offset code values generated and stored, comparator 42 is then powered down in step 406. In query step 407, a determination is made as to whether the radio is in the receive mode. If not (the answer is NO), the entire receive path is powered down in step 408. If the answer to query step is YES, indicating that the receive mode is active, the IF path (which had been powered down in step 403) is powered up in step 409.

As long as the processor maintains the state of the CAL_EN lead as a logical high ("1"), the offset correction code stored in the SAR 42 is retained. During the radio's normal receive mode, the IDAC 50 remains powered up, and supplies the appropriate differential offset adjustment current Iadj to the low-pass filter 35 and the buffer amplifier 37 of the baseband signal processing path 38, thereby correcting for the measured DC offset. This allows the received signal processing components to be shut down along with the IDAC 50, if necessary; when powered back up, the previously measured DC offset correction code will still be stored in the SAR 42, so that the offset voltages generated for the low-pass filter 35 and buffer amplifier 37 will return to their previous values, and the baseband offset will return to a nulled state (provided that the offset has not drifted from its previously measured value over time).

The DC offset problem is remedied by the DC offset measurement and correction scheme, which is operative to take the radio's baseband signal path off-line for a prescribed offset measurement interval, and to measure DC offset introduced into the baseband path using successive approximation. Selected segments of a resulting multibit code representative of the offset are used to supply selected amounts of offset current to baseband signal path components, such as low-pass filter and associated buffer amplifier circuitry installed between the RF/IF - baseband mixer and downstream analog-to-digital conversion circuitry. The parameters of the low-pass filter and the buffer amplifier are defined such that the bits that make up the DC offset correction code impart a binary-scaled DC offset correction voltage to the baseband signal path.

A DC offset correction arrangement compensates for DC offset introduced into a signal processing path of a device such as a data radio for application to a downstream digital data signal analyzer. During an off-line, calibration cycle, DC offset is measured by a successive approximation DC offset measurement circuit, which stores a multibit output digital code representative of the measured offset. This code is coupled to a DC offset correction circuit, which supplies selected signal processing components, such as a negative feedback low-pass filter coupled and a buffer amplifier, with a correction current that causes the supplied components to inject prescribed portions of a binarily weighted correction voltage that effectively cancels the measured DC offset.

**Claims**

1. A DC offset correction device for compensating for DC offset that may be introduced by one or more components of a baseband conversion processing path of a communications receiver to which a signal received from a transmission channel is coupled for application to a downstream digital data signal analyzer to recover transmitted data, said DC offset correction device characterized in that a DC offset measurement circuit that is operative to decouple said baseband conversion processing path from said transmission channel and digitally measure any DC offset that may be present in said baseband conversion processing path absent said received signal, and a DC offset correction circuit coupled to said DC offset measurement circuit and to at least one signal processing component of said baseband conversion processing path, and being operative to inject into said baseband conversion processing path, by way of said at least one signal processing component, a DC offset correction voltage that effectively cancels said DC offset.

2. A DC offset correction device as claimed in claim 1, wherein said DC offset measurement circuit is operative to perform digital successive approximation of said DC offset that may be present in said baseband conversion processing path absent said received signal, and includes a successive approximation register that stores a multibit digital code representative of measured DC offset, in which said DC offset correction circuit is operative to inject, by way of a plurality of signal processing components of said baseband conversion processing path, prescribed portions of said DC offset correction voltage that effectively cancels said DC offset.

3. A DC offset correction device as claimed in claim 2, wherein said DC offset measurement circuit further includes a digital-to-analog converter which is operative to convert said multibit digital code to analog electrical values that are coupled to said at least one signal processing component of said baseband conversion processing path, and the parameters of said plurality of signal processing components of said baseband conversion processing path are such that said analog electrical values are binarily defined.

4. A DC offset correction device as claimed in claim 3, wherein said DC offset measurement circuit is operative to produce a multibit digital output code representative of said DC offset and said DC offset correction circuit is operative to impart a first amount of said DC offset correction voltage to said baseband conversion processing path by way of said first signal processing component in accordance with a first code segment of said multibit digital output code, and to impart a second amount of said DC offset correction voltage to said baseband conversion processing path by way of said second signal processing component.

5. A DC offset correction devices as claimed in claim 4, wherein parameters of said first and second signal processing components are such that the resultant DC offset correction voltage imparted to said baseband conversion processing path is binarily weighted in accordance with the bit contents of said multibit digital output code, and said first and second signal processing components respectively comprise a negative feedback low-pass filter coupled and a buffer amplifier coupled in cascaded.

6. A DC offset correction device for compensating for DC offset that may be introduced in a signal processing path of a communications device for application to a downstream digital data signal analyzer characterized in that a successive approximation DC offset measurement circuit that is operative to measure DC offset in said signal processing path and to store a multibit output digital code representative of measured DC offset; and a DC offset correction circuit coupled to said successive approximation DC offset measurement circuit and to a plurality of signal processing components of said signal processing path, and being operative to inject into said signal processing path, by way of said plurality of signal processing components, respective components of a resultant DC offset correction voltage that effectively cancels said DC offset.

7. A DC offset correction device as claimed in claim 6, wherein said offset measurement circuit includes a digital-to-analog converter which is operative to convert said multibit digital code to respective analog electrical values that are coupled to said plurality of signal processing components of said baseband conversion processing path, and wherein parameters of said plurality of signal processing components are such that said analog electrical values are binarily defined, and said signal processing components include a negative feedback low-pass filter coupled and a buffer amplifier.

8. For use with a radio receiver, in which a signal received by way of a radio transmission channel is subjected to a baseband conversion processing path for application to a downstream digital data signal analyzer to recover transmitted data, a method for compensating for DC offset that may be introduced by one or more components in said baseband conversion processing path, said method comprising the steps of:

(a) decoupling said baseband conversion processing path from said radio transmission channel and digitally measuring any DC offset that may be present in said baseband conversion processing path absent said received signal; and
(b) recoupling said baseband conversion processing path to said radio transmission channel and digitally injecting, by way of at least one signal processing component of said baseband conversion processing path, a DC offset correction voltage that effectively cancels said DC offset measured in step (a), and in which step (a) comprises performing digital successive approximation of said DC offset that may be present in said baseband conversion processing path absent said received signal.

9. A method as claimed in claim 8, wherein step (b) comprises injecting, by way of a plurality of signal processing components of said baseband conversion processing path, prescribed portions of said DC offset correction voltage that effectively cancels said DC offset measured in step (a), and step (a) comprises generating a multibit digital code representative of said measured DC offset and converting said multibit digital code to analog electrical values that are coupled to said plurality of signal processing components of said baseband conversion processing path, and in which parameters of said plurality of signal processing components of said baseband conversion processing path are such that said analog electrical values are binarily defined.

10. A method as claimed in claim 8, wherein step (b) comprises imparting a first prescribed amount of said DC offset correction voltage to said baseband conversion processing path by way of a first of said plurality of signal processing components, and imparting a second prescribed amount of said DC offset correction voltage to said baseband conversion processing path by way of a second of said plurality of signal processing components, and step (a) comprises performing digital successive approximation of said DC offset that may be present in said baseband conversion processing path absent said received signal, and storing a multibit digital output code representative of said DC offset, and wherein step (b) comprises imparting a first amount of said DC offset correction voltage to said baseband conversion processing path by way of said first signal processing component in accordance with a first code segment of said multibit digital output code, and imparting a second amount of said DC offset correction voltage to said baseband conversion processing path by way of said second signal processing component.

FIG. 1

**FIG. 2**

**FIG. 3**

START

CHANGE CAL_EN LEAD — 401

START COUNT / POWER-UP OFFSET MEASUREMENT CKT. — 402

POWER-DOWN RF-IF SIGNAL INPUT PATH — 403

WAIT SETTLING TIME-OUT — 404

INITIATE SAR MEASUREMENT — 405

POWER-DOWN COMPARATOR — 406

RECEIVE MODE ? — 407

YES → POWER-UP IF/RF PATH — 409

NO → POWER-DOWN RECEIVE PATH — 408

*FIG. 4*

### TABLE 1: SAR OFFSET CORRECTION BIT WEIGHTING

| BIT | LPF (Gdc=2.5 V/V) | | | OUTPUT BUFFER (Gdc+4 V/V) | | | BASEBAND OUTPUT |
|---|---|---|---|---|---|---|---|
| | IDAC DIFFERENTIAL OUTPUT | R4 | Vout | IDAC DIFFERENTIAL OUTPUT | R9 | Vout | Vout |
| 0 | – | | – | 1uA | | 2mV | 2mV |
| 1 | – | | – | 2uA | | 4mV | 4mV |
| 2 | – | | – | 4uA | 2K | 8mV | 8mV |
| 3 | – | | – | 8uA | | 16mV | 16mV |
| 4 | 1uA | | 8mV | – | | – | 32mV |
| 5 | 2uA | 8K | 16mV | – | | – | 64mV |
| 6 | 4uA | | 32mV | – | | – | 128mV |
| 7 | 8uA | | 64mV | – | | – | 256mV |
| 8 SIGN | – | | – | – | – | – | – |

## FIG. 5

EP 1 035 691 A2